# EUROPÄISCHE PATENTSCHRIFT

(11) **EP 3 959 058 B1**
(45) Veröffentlichungstag und Bekanntmachung des Hinweises auf die Patenterteilung: **26.10.2022**
(21) Anmeldenummer: 21725715.3
(22) Anmeldetag: 05.05.2021
(51) Int. Cl.: B29C 45/17

(54) **SPRITZGIESSEINHEIT FÜR EINE SPRITZGIESSMASCHINE ZUR VERARBEITUNG VON KUNSTSTOFFEN**
INJECTION MOLDING UNIT FOR AN INJECTION MOLDING MACHINE FOR PROCESSING PLASTICS
UNITÉ DE MOULAGE PAR INJECTION POUR UNE MACHINE DE MOULAGE PAR INJECTION POUR LA TRANSFORMATION DE MATIÈRES PLASTIQUES

(30) Priorität: 08.05.2020 DE 102020112590
(43) Veröffentlichungstag der Anmeldung: 02.03.2022
(73) Patentinhaber: Arburg GmbH + Co KG, 72290 Loßburg (DE)
(72) Erfinder: BLETSCHER, Rainer, 72270 Baiersbronn (DE); DUFFNER, Eberhard, 72181 Starzach (DE)
(74) Vertreter: RPK Patentanwälte Reinhardt, Pohlmann und Kaufmann Partnerschaft mbB
(86) Internationale Anmeldenummer: PCT/EP2021/061898
(87) Internationale Veröffentlichungsnummer: WO 2021/224344

(56) Entgegenhaltungen:
- EP-A1- 0 314 942
- EP-A1- 0 316 561
- DE-C1- 4 142 927
- FR-A1- 2 450 156

## Beschreibung

Die Erfindung betrifft eine Spritzgießeinheit für eine Spritzgießmaschine zur Verarbeitung von Kunststoffen und anderen plastifizierbaren Massen mit den Merkmalen des Oberbegriffs des Anspruches 1.

Spritzgießmaschinen zur Verarbeitung von Kunststoffen und anderen plastifizierbaren Massen weisen regelmäßig eine Formschließeinheit zur Aufnahme von Spritzgießformen auf, in die mittels einer in einer Spritzgießeinheit aufgenommenen Plastifiziereinheit plastifiziertes Material eingespritzt wird. Die Spritzgießeinheit ist dazu auf einem Maschinenfuß über einen Trägerblock abgestützt, in dem ein Plastifizierzylinder auswechselbar aufnehmbar ist. Im Plastifizierzylinder selbst ist ein entlang einer Spritzachse verschiebbares Fördermittel wie eine Förderschnecke vorgesehen, mittels der das zu plastifizierende Material plastifiziert und in Folge eines Einspritzvorgangs eingespritzt werden.

Um den Plastifizierzylinder in der Aufnahmebohrung des Trägerblocks auswechselbar und lösbar aufzunehmen, ist eine Verriegelungseinrichtung vorgesehen, die einerseits zuverlässig den Plastifizierzylinder in der Aufnahmebohrung halten soll, andererseits die beim Spritzgießprozess anfallenden Kräfte zuverlässig vom Plastifizierzylinder auf den Trägerblock übertragen muss.

Aus der dem Oberbegriff des Anspruches 1 zugrunde liegenden EP 0 316 561 A1 ist eine Spritzgießeinheit für eine Spritzgießmaschine bekannt, bei der in einer Aufnahmebohrung in einem Trägerblock ein auswechselbar, lösbar aufnehmbarer Plastifizierzylinder angeordnet ist. Eine Verriegelungseinrichtung ist zum wechselweisen Verriegeln der Plastifiziereinheit am Trägerblock und Entriegeln vom Trägerblock durch Relativbewegung von quer zur Spritzachse verlaufenden Schrägflächen an miteinander in Wirkverbindung stehenden Verriegelungselementen vorgesehen. Die Verriegelungselemente sind an Lagerflächen von Trägerblock und/oder Plastifizierzylinder geführt.

Die EP 0 314 942 A1 zeigt eine vergleichbare Verriegelungseinrichtung zur Verriegelung eines Plastifizierzylinders in einer Ausnehmung eines Trägerblocks einer Spritzgießeinheit. Hydraulisch betätigbare Schieber hintergreifen Spannuten am Ende des Plastifizierzylinders, wodurch eine Verriegelung bewirkt werden kann.

Aus der EP 0 200 962 B1 ist eine Spritzgießeinheit bekannt, in der ein Plastifizierzylinder mittels Riegeln gehalten wird. Beim Verriegeln greifen Schrägflächen von in Führungsbahnen geführten Riegel an der rückwärtigen, abgeschrägten Stirnfläche des Plastifzierzylinders an.

Aus der EP 0 548 704 A1 ist eine Kunststoffspritzgießeinheit mit einer Verriegelungseinrichtung für den Plastifizierzylinder bekannt, bei der die Verriegelung mittels einer Gewindeverbindung über einen motorischen Antrieb erfolgt. Der Plastifizierzylinder besitzt ein Verriegelungsgewinde, das symmetrisch zur Spritzachse am Plastifizierzylinder angeordnet ist. Die damit in Verbindung stehende Mutter weist eine Verzahnung auf, in die ein Spindeltrieb zur Betätigung eingreift.

Aus der JP S58- 187 323 A ist eine Vorrichtung zum Verriegeln eines Plastifizierzylinders an einer Spritzgießmaschine bekannt, bei der Keile in entsprechend geformte Nuten des Plastifizierzylinders über Zylindereinheiten eingesteuert werden. Eine Lösung des Plastifizierzylinders von der Spritzgießeinheit erfolgt durch ein Zurückziehen der Keile aus den Nuten.

Aus der DE 40 21 857 A1 ist eine Spritzgießmaschine mit einer Spritzgießeinheit und einem austauschbaren Plastifizierzylinder bekannt. Der Plastifizierzylinder ist mittels mechanisch oder hydraulisch betätigbaren Aufspannvorrichtungen an der Spritzgießmaschine befestigt oder an diese kuppelbar. Der Plastifizierzylinder ist mit einer Adapterplatte versehen, an der die Vorrichtungen der Spritzgießmaschine angreifen. Die Verriegelung erfolgt über keilförmige Spannelemente.

Aus der DE 37 35 701 C1 ist eine automatisierte Verriegelungseinrichtung zum Verriegeln eines Plastifizierzylinders am Trägerblock einer Spritzgießeinheit bekannt. Über eine hydraulisch betätigbare Mechanik, die am Trägerblock angeordnet ist, werden Schieber in U-förmige Ausnehmungen des Plastifizierzylinders eingesteuert und damit der Plastifizierzylinder am Trägerblock verspannt.

Ausgehend von diesem Stand der Technik liegt der vorliegenden Erfindung die Aufgabe zugrunde, eine derartige Spritzgießeinheit dahingehend weiterzubilden, dass zuverlässig auch größere Kräfte zwischen Plastifizierzylinder und Trägerblock übertragen werden können und gleichzeitig eine hinsichtlich des Plastifizierzylinders verschleißarme Verriegelung geschaffen wird.

Diese Aufgabe wird durch eine Spritzgießeinheit mit den in Anspruch 1 genannten Merkmalen gelöst.

Die Spritzgießeinheit weist einen Trägerblock mit einer zentralen Aufnahmebohrung auf, in der ein Plastifizierzylinder einer Plastifiziereinheit lösbar aufnehmbar ist. Eine Verriegelungseinrichtung ist zum wechselweisen Verriegeln der Plastifiziereinheit am Trägerblock und Entriegeln der Plastifiziereinheit vom Trägerblock durch Relativbewegung von quer zur Spritzachse verlaufenden Schrägflächen von miteinander in Wirkverbindung stehenden Verriegelungselementen vorgesehen. An der Außenfläche des Plastifizierzylinders ist eine Lagermutter vorgesehen, wobei die in Richtung auf den Trägerblock zeigende Fläche der Lagermutter wenigstens eine Lagerfläche für die Verriegelungselemente bildet.

Grundsätzlich sind mehrere Verriegelungselemente vorgesehen, wobei die Verriegelungselemente in einer Ausführungsform unabhängig von Trägerblock und Plastifiziereinheit aufeinander zu zeigende Schrägflächen aufweisen, die bei der Verriegelungs- und bei der Entriegelungsbewegung aufeinander gleiten. Dies hat den Vorteil, dass die einem stärkeren Verschleiß ausgesetzten Schrägflächen nicht am Trägerblock und der Plastifiziereinheit vorgesehen sind, sondern an den leichter auszuwechselnden Verriegelungselementen, da die Lagerflächen zur Lagermutter und damit zur Plastifiziereinheit und zum Trägerblock mit diesen Schrägflächen nicht in Berührung kommen. Gleichzeitig ergibt sich eine zur Spritzachse symmetrische Krafteinleitung, insbesondere der beim Spritzgießprozess entstehenden Kräfte, wie z.B. der Einspritzkräfte, was aufgrund der höheren Kräfte insbesondere bei großen Maschinen von Vorteil ist und den Verschleiß am Plastifizierzylinder ebenso verringert wie die Einleitung der Kräfte in die Lagermutter.

Alternativ sind die mehreren Verriegelungselemente an der Lagermutter so angeordnet, dass sie an der von der Lagerfläche der Lagermutter beabstandeten Seite gegenläufig geneigte Schrägflächen aufweisen. Damit erfolgt die Krafteinleitung in Richtung auf die dem Plastifizierzylinder zugeordnete Lagermutter. Gleichzeitig ist eine zur Spritzachse symmetrische Krafteinleitung gewährleistet, so dass der Verschleiß insbesondere am Plastifizierzylinder in Folge der Verriegelungs- und Entriegelungsbewegung des Plastifizierzylinders am Trägerblock als auch in Folge der zyklischen Mikrobewegungen beim Druckaufbau und Druckabbau während des Spritzzyklus deutlich verringert ist.

Vorzugsweise sind die Lagerflächen von Trägerblock und/oder Lagermutter im rechten Winkel zur Spritzachse angeordnet. Da diese Lagerflächen zugleich die Flächen sind, entlang derer die Verriegelungselemente gleiten, sind diese Lagerflächen gegenüber den verriegelnden Schrägflächen nicht durch Querkräfte belastet, da lediglich eine reine Normalkraft diese Flächen belastet. An den Schrägflächen kann hingegen auch eine Querkraft in der Fläche entstehen, die zum Verschleiß beiträgt.

In einer bevorzugten Ausführungsform werden die Verriegelungselemente durch wenigstens zwei diametral zur Spritzachse zwischen Träger und Lagermutter geführte Keile gebildet. Dies hat den Vorteil, dass mit wenigen Elementen die Verriegelung einfach und zuverlässig sichergestellt werden kann, ohne dass es einer aufwendigen Umlenkung von Komponenten und gegebenenfalls anfälliger mechanischer Verbindungsstellen bedarf.

Vorzugsweise sind die unabhängig von Trägerblock und Lagermutter aufeinander zu zeigenden Schrägflächen als Schrägflächen von ansteigenden bzw. fallenden Steigungsflächen von wenigstens zwei als Verriegelungselemente ausgebildeten Drehkeilen ausgebildet. Dadurch lassen sich Kräfte vorteilhaft symmetrisch zur Spritzachse und umlaufend um den Plastifizierzylinder einbringen, so dass eine gleichmäßige Belastung gewährleistet ist.

Vorzugsweise laufen die Steigungsflächen beabstandet vom Umfang des Plastifizierzylinders um den Plastifizierzylinder um, so dass vorteilhafterweise eine symmetrische Krafteinleitung um den Plastifizierzylinder herum erfolgt. Dies trägt zu einer verschleißarmen Krafteinleitung bei.

In einem bevorzugten Ausführungsbeispiel besteht ferner die Möglichkeit, dass wenigstens einer der Drehkeile außenseitig einen Zahnkranz aufweist. Dies gestattet eine Betätigung des Drehkeils unmittelbar an seiner Außenseite, wodurch eine mechanischer oder motorischer Antrieb zuverlässig und leicht auch mit hohem Drehmoment angreifen kann. In einer bevorzugten Ausführungsform kämmt eine Zahnstange mit dem Zahnkranz des Drehkeils, so dass bei axialer Bewegung der Zahnstange relativ zum Trägerblock ein Rotieren am Drehkeil bewirkbar ist. Dies gestattet eine mechanisch einfache und dennoch zuverlässige Krafteinleitung eines Drehmoments zum Verriegeln und Entriegeln des Plastifizierzylinders am Trägerblock. Gleichzeitig werden damit auch die grundsätzlichen baulichen Voraussetzungen dafür geschaffen, eine derartige Betätigung motorisch durchzuführen.

Um vorteilhaft die Kräfte symmetrisch in den Plastifizierzylinder einzuleiten und auch am Trägerblock eine zuverlässige Verriegelung zu gewährleisten, sind dann, die Schrägflächen der Verriegelungselemente an der von der Lagerfläche der Lagermutter beabstandeten Seite angeordnet sind, die damit am Trägerblock anliegenden Schrägflächen der beiden Verriegelungselemente flächengleich. Durch die Flächengleichheit werden an beiden Seiten gleiche Kräfte übertragen, so dass sich eine gleichmäßige Belastung und symmetrische Krafteinleitung hinsichtlich des Trägerblocks ergibt. Durch die Kraftanleitung an der Lagerfläche der Lagermutter ist zudem eine schonende Übertragung der Kräfte am Plastifizierzylinder gewährleistet.

Vorzugsweise sind zur Betätigung der Verriegelungselemente Stellelemente vorgesehen, die am Trägerblock gelagert und an den Stellelementen verstellbar gelagert betätigbar sind oder auch alternativ und ergänzend zwischen den Verriegelungselementen untereinander verstellbar gelagert sind. Dadurch lassen sich diese Verriegelungselemente individuell einstellen und justieren, um dadurch auch eine symmetrische Krafteinleitung sicherzustellen.

Eine symmetrische Krafteinleitung hat grundsätzlich den Vorteil, dass die entstehenden Kräfte nicht nur zuverlässig abgeleitet werden, sondern auch ohne Einfluss auf den Spritzgießvorgang und damit die Qualität der herzustellenden Spritzteile sind.

Weitere Vorteile ergeben sich aus den Unteransprüchen und der nachfolgenden Beschreibung bevorzugter Ausführungsbeispiele.

Im Folgenden wird die Erfindung anhand der in den beigefügten Figuren dargestellten Ausführungsbeispiele näher erläutert. Es zeigen:
- Fig. 1: eine dreidimensionale Ansicht einer Spritzgießeinheit,
- Fig. 2: eine dreidimensionale Ansicht eines Trägerblocks mit darin aufgenommenem Plastifizierzylinder in einem ersten Ausführungsbeispiel,
- Fig. 3: eine Rückansicht des Trägerblocks mit geöffneter Verriegelungseinrichtung,
- Fig. 4: einen Schnitt nach Linie D-D von Fig. 3,
- Fig. 5: eine Rückansicht der Trägerblocks gemäß Fig. 3 mit geschlossener Verriegelungseinrichtung,
- Fig. 6: einen Schnitt nach Linie E-E von Fig. 5,
- Fig. 7: einen Schnitt durch den Trägerblock ohne Plastifizierzylinder in einer Stellung gemäß Fig. 6,
- Fig. 8: eine dreidimensionale Ansicht eines Trägerblocks mit darin aufgenommenem Plastifizierzylinder in einem zweiten Ausführungsbeispiel,
- Fig. 9: eine Rückansicht der Plastifiziereinheit gemäß Fig. 8,
- Fig. 10: einen Schnitt nach Linie A-A von Fig. 9,
- Fig. 11: eine Seitenansicht der Spritzgießeinheit gemäß Fig. 9,
- Fig. 12: eine dreidimensionale Ansicht eines Trägerblocks ohne Plastifizierzylinder in einem dritten Ausführungsbeispiel,
- Fig. 13, 14: eine teilweise nach Linie F-F von Fig. 15 geschnittene Rückansicht des Trägerblocks gemäß Fig. 12 mit geöffneter bzw. geschlossener Verriegelungseinrichtung,
- Fig. 15: eine Seitenansicht des Trägerblocks gemäß Fig. 12
- Fig. 16: eine dreidimensionale Ansicht eines Trägerblocks mit darin aufgenommenem Plastifizierzylinder in einem vierten Ausführungsbeispiel,
- Fig. 17: eine Seitenansicht des Trägerblocks gemäß Fig. 16,
- Fig. 18: einen Schnitt nach Linie B-B von Fig. 17.

Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Die Figuren zeigen eine Spritzgießeinheit für eine Spritzgießmaschine zur Verarbeitung von Kunststoffen und anderen plastifizierbaren Massen, wie pulverförmigen, metallischen oder keramischen Massen in vier Ausführungsbeispielen dargestellt ist. In diesen Ausführungsbeispielen werden für dieselben Komponenten dieselben Bezugszeichen verwendet, sofern im Folgenden nicht ausdrücklich auf die unterschiedlichen Komponenten eingegangen wird.

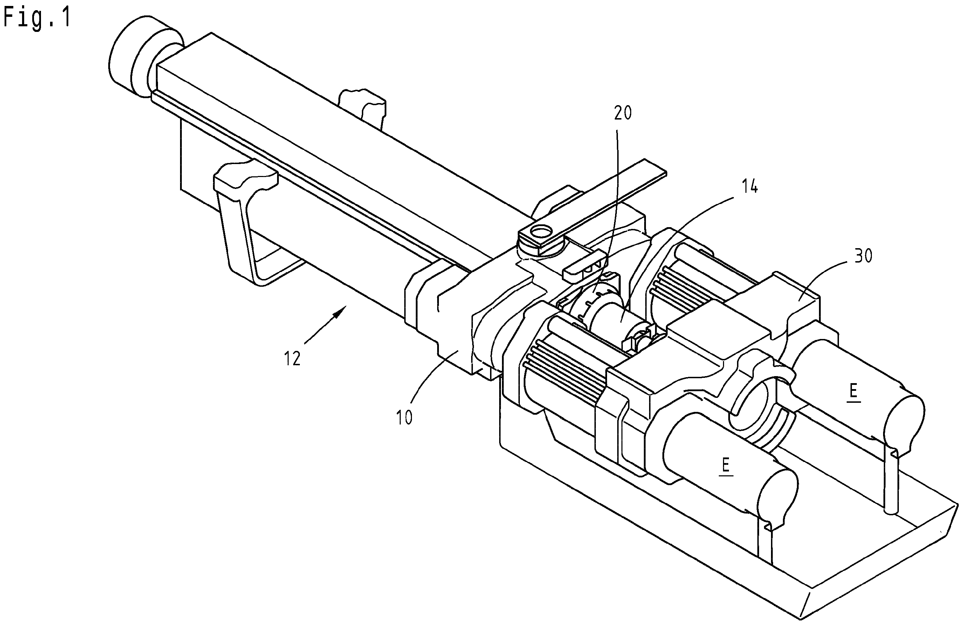

Eine derartige Spritzgießeinheit ist Teil einer (Kunststoff)-Spritzgießmaschine, die in der Regel eine Formschließeinheit und eine Spritzgießeinheit umfasst. In der Formschließeinheit ist eine sich zyklisch öffnende und schließende Spritzgießform aufgenommen, in deren Kavität das herzustellende Spritzteil gefertigt wird. Hierzu wird in der Spritzgießeinheit und zwar im Plastifizierzylinder 14 der Plastifiziereinheit 12 zu plastifizierendes Material homogenisiert und plastifiziert. Im Plastifizierzylinder 14 ist eine entlang einer Spritzachse a-a verschiebbares Fördermittel 16 in Form meist einer Förderschnecke oder eines Förderkolbens aufgenommen, das in Folge einer Einspritzbewegung das plastifizierte Material in den Formhohlraum einspritzt. Für die Einspritzbewegung sind Einspritzeinheiten E (Fig. 1) in Aufnahmenöffnungen 10c des Trägerblocks 10 gelagert. Im Spritzgießwerkzeug wird das plastifizierte Material abgekühlt, bis es erstarrt, und nach dem Abkühlen aus der Spritzgießform als Spritzteil freigesetzt.

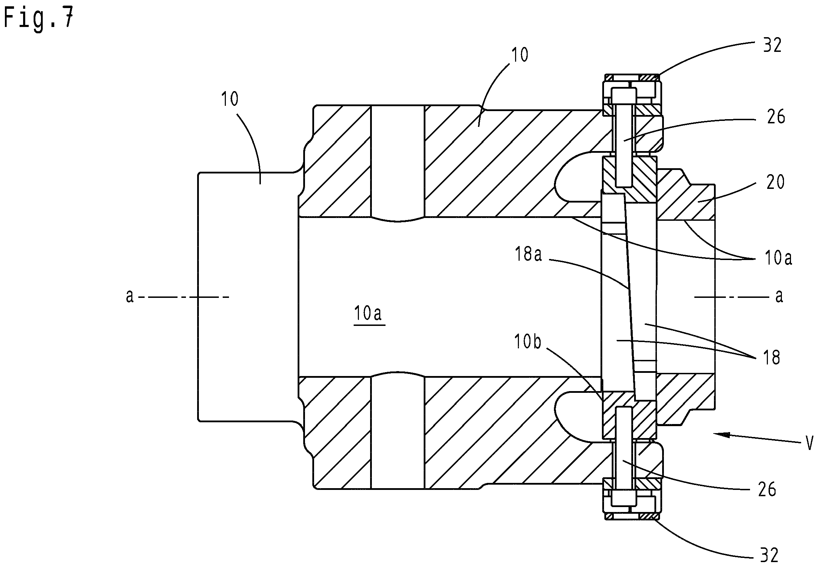

Die Spritzgießeinheit gemäß Fig. 1 weist einen Trägerblock 10 mit einer in Fig. 7 erkennbaren zentralen Aufnahmebohrung 10a auf. Grundsätzlich kann diese Aufnahmebohrung auch an anderer Stelle, d.h. nicht nur zentral angeordnet sein. In der Aufnahmebohrung 10a ist der Plastifizierzylinder 14 auswechselbar und lösbar aufnehmbar angeordnet. Um sicherzustellen, dass der Plastifizierzylinder 14 während des Spritzzyklus zuverlässig in der Aufnahmebohrung 10a im Trägerblock 10 festgelegt ist, ist eine Verriegelungseinrichtung V zum wechselweisen Verriegeln der Plastifiziereinheit 14 am Trägerblock 10 und Entriegeln der Plastifiziereinheit 12 vom Trägerblock 10 vorgesehen. Hierzu weist die Verriegelungseinrichtung V Verriegelungselemente 18 auf, die durch Relativbewegung von quer zur Spritzachse a-a verlaufenden Schrägflächen 18a die Verriegelung bzw. Entriegelung bewirken.

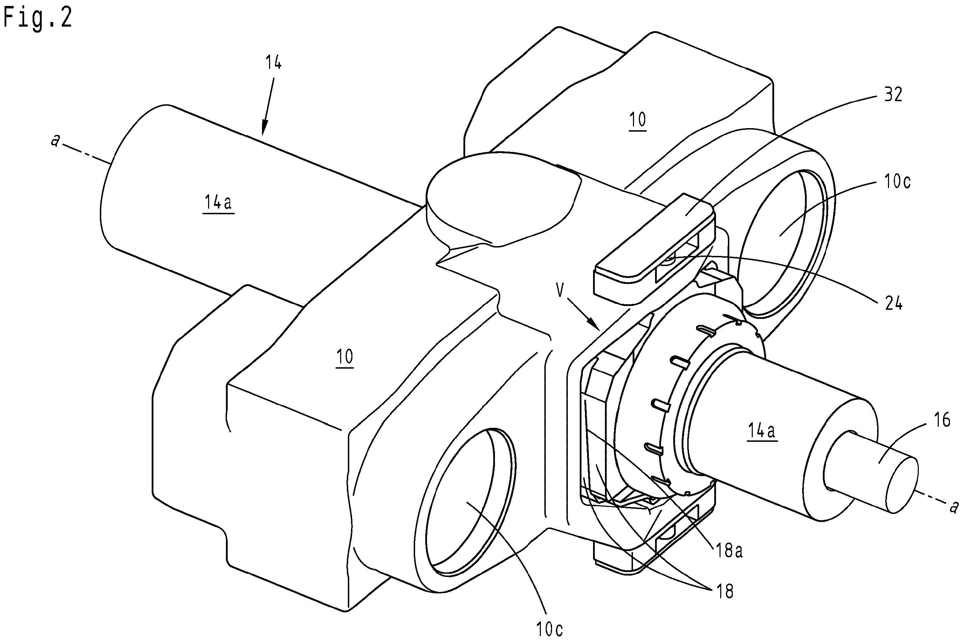

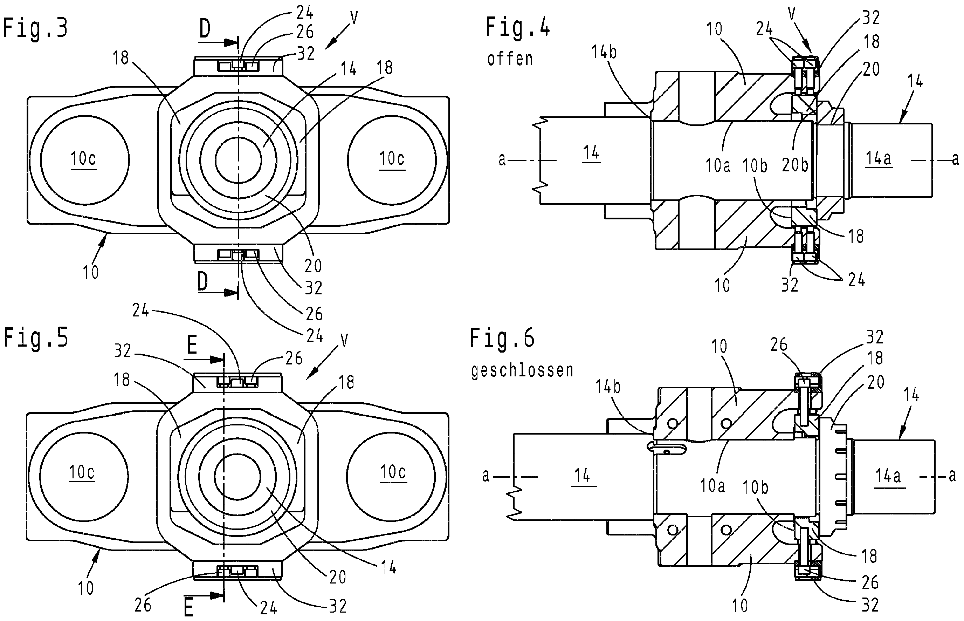

Die miteinander in Wirkverbindung stehenden Verriegelungselemente 18 sind an Lagerflächen 10b, 20b von Trägerblock 10 und/oder Lagermutter 20 am Plastifizierzylinder 14 geführt. Gemäß Fig. 2, 4, 6 steht die Lagermutter 20 an der Außenfläche 14a des Plastifizierzylinders 14 mit diesem in Wirkverbindung steht. Gemäß Fig. 4 und 6 bildet die Lagermutter 20 mit ihrer in Richtung auf den Trägerblock 10 zeigenden Fläche wenigstens eine der Lagerflächen, an denen die Verriegelungselemente geführt sind. Es handelt sich dabei um die Lagerfläche 20b, die dem Plastifizierzylinder zugeordnet ist.

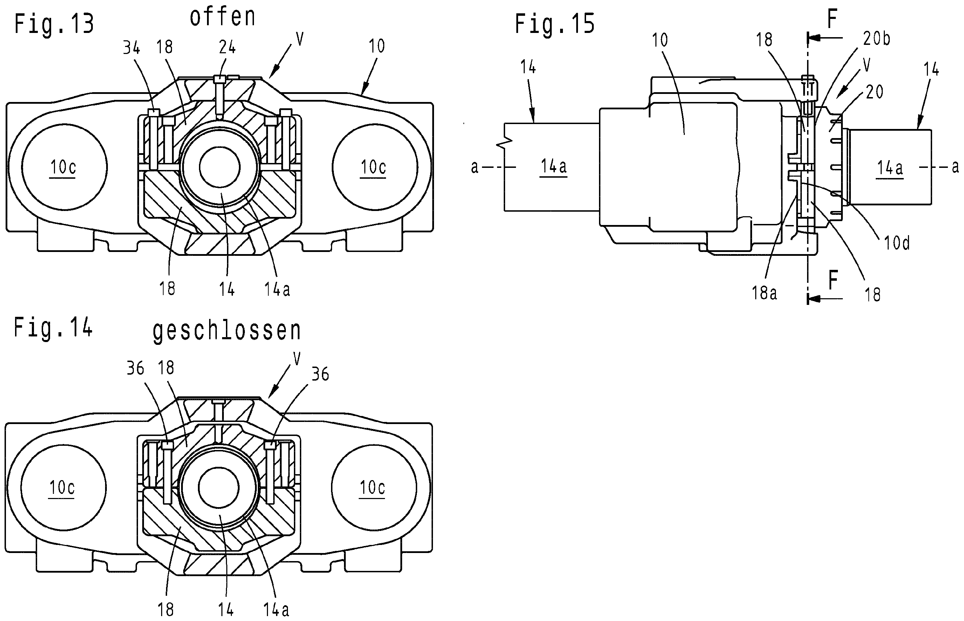

Grundsätzlich sind in allen Ausführungsbeispielen mehrere Verriegelungselemente vorgesehen, die im ersten, zweiten und vierten Ausführungsbeispiel unabhängig von Trägerblock 10 und Plastifiziereinheit aufeinander zu zeigende Schrägflächen 18a aufweisen. Entlang dieser Schrägflächen 18a gleiten die Verriegelungselemente 18 bei der Verriegelungs- bzw. Entriegelungsbewegung aufeinander, d.h. relativ zueinander. Alternativ sind die Schrägflächen 18a im dritten Ausführungsbeispiel an der von der Lagerfläche 20b und der Lagermutter 20 beabstandeten Seite der Verriegelungselemente 18 als gegenläufig geneigte Schrägflächen 18a vorgesehen. Diese gleiten bei der Verriegelungs- bzw. Entriegelungsbewegung synchron an Schrägflächen 10d (Fig. 15) des Trägerblocks 10.

Beiden Alternativen ist gemeinsam, dass sie eine symmetrische Krafteinleitung der beim Spritzgießprozess auftretenden Kräfte beim Übergang vom Plastifizierzylinder 14 zum Trägerblock 10 ermöglichen, wobei durch die Lagermutter 20 gleichzeitig eine verschleißarme Lagerung gegenüber der Anbindung am Plastifizierzylinder erfolgt. Damit ist kein stärkerer Eingriff in die Wandung des Plastifizierzylinders 14 in Form von Aussparungen oder Ausnehmungen erforderlich, stattdessen kann die Lagermutter 20 auf der Außenfläche 14a des Plastifizierzylinders 14 angeordnet werden und mit ihrer Lagerfläche den Verriegelungselementen 18 eine Anlage bieten. Dies gestattet es auch bei großen Maschinen eine leicht aufzubauende und zuverlässige Krafteinleitung zu verwirklichen, ohne dass sich eine verschleißbehaftete Lagerung am Plastifizierzylinder ergibt.

In Fig. 6, die die Verriegelungsvorrichtung V des ersten Ausführungsbeispiels in geschlossener Stellung zeigt, ist zu erkennen, dass die Lagerflächen 10b, 20b am Trägerblock 10 bzw. an der Lagermutter 20 nicht schräg zur Spritzachse a-a stehen, sondern im rechten Winkel zur Spritzachse a-a angeordnet sind. Damit fallen an diesen Lagerflächen nur normal zur Lagerfläche wirkende Kräfte an, so dass an diesen Stellen auch keine Querkräfte in der Fläche entstehen, die zu Reibung und damit zu Verschleiß führen können. Die verschleißgefährdeten Flächen werden damit auf die Schrägflächen 18a der Verriegelungselemente 18 verlagert und damit auf Elemente, die im Verhältnis zum Plastifizierzylinder 14 oder Trägerblock 10 leicht auszutauschen sind.

Im ersten Ausführungsbeispiel der Fig. 1 bis 7 sind die Verriegelungselemente 18 durch wenigstens zwei diametral zur Spritzachse a-a zwischen Trägerblock 10 und Lagermutter 20 angeordnete und an den Lagerflächen 10b bzw. 20b geführte Keile gebildet. Die Verriegelungseinrichtung V umfasst gemäß Fig. 3 ein Lagerelement 32, an dem verschiedene Stellelemente 24, 26 gelagert sind. Gemäß Fig. 3 sind mittig Stellelemente 24 vorgesehen, die im Lagerelement 32 so angeordnet sind, dass bei ihrer Betätigung die Verriegelungselemente 18 in Verriegelungsposition überführt werden. Die im Lagerelement 32 gelagerten Stellelemente 24 in Form von Schrauben gelangen dabei mit ihren Enden in Anlage an den Keilen. Um diese Keile aus der verriegelten Stellung wieder in die entriegelte Stellung zu überführen, sind gemäß Fig. 6 weitere Stellelemente 26 vorgesehen, die einerseits am Lagerelement 32 gelagert sind, andererseits aber mit den Verriegelungselementen 18 in Eingriff stehen. Über diese Stellelemente 26 können die Verriegelungselemente 18 aus der verriegelten Position in die entriegelte Position überführt werden.

Grundsätzlich erfolgt die Verriegelung des Plastifizierzylinders 14 am Trägerblock 10 wie folgt: Im Ausgangszustand weist der Trägerblock 10 die Aufnahmebohrung 10a auf. In diese Aufnahmebohrung wird in Fig. 4 von links der Plastifizierzylinder 14 eingeführt, bis er mit einer Schulter 14b auf der linken Seite am Rand der Aufnahmebohrung 10a zur Anlage kommt. Zu diesem Zeitpunkt ragt das andere Ende des Plastifizierzylinders 14 auf der gegenüberliegenden Seite bereits aus dem Trägerblock 10 heraus. Die Verriegelungselemente 18 befinden sich in diesem Moment in einer geöffneten Stellung, wie in Fig. 4 ersichtlich. Nun wird die Lagermutter 20 auf der Außenfläche 14a des Plastifizierzylinders 14 angebracht. Sie bildet eine Lagerfläche 20b für die Verriegelungselemente 18 mit ihrer auf die Verriegelungselemente 18 zu zeigenden Fläche. Gemäß Fig. 3,4 werden jetzt die Stellelemente 24 betätigt, die dadurch die Verriegelungselemente 18 relativ zueinander verlagern. Dabei wird das in Fig. 4 obere Verriegelungselement 18 genauso betätigt, wie das untere Verriegelungselement 18. Gemäß Fig. 4 sind die Verriegelungselemente dabei an der Lagerfläche 10b des Trägerblocks 10 ebenso geführt, wie an der Lagerfläche 20b der Lagermutter. Gleichzeitig gleiten die Schrägflächen 18a aufeinander, so dass sich eine Axialbewegung des Plastifizierzylinders in Fig. 4 nach rechts, d.h. eine Klemmbewegung ergibt.

Die Lagermutter 20 wird zu Beginn des Verriegelungsvorgangs über ein Außengewinde auf "Block" mit den als Keilen ausgebildeten Verriegelungselementen 18 angedreht. Anschließend erfolgt eine vertikale Verschiebung der Keile über die Stellelemente 24. Die vertikale Verschiebung führt zu einer horizontalen Spannkraft zwischen Trägerblock 10 und Lagermutter 20. Wenn das System über die Verriegelungselemente unter "Last" steht, ist ein Verdrehen der Lagermutter 20 nicht mehr möglich. In dieser verriegelten Stellung ist ein Betrieb der Plastifiziereinheit 12 möglich.

Soll die Verriegelung wieder gelöst werden, werden zunächst die Stellelemente 24 gelöst, so dass die Stellelemente 24 nicht mehr an den Verriegelungselementen 18 anliegen. Im nächsten Schritt werden nun die Stellelemente 26 betätigt, um die Verriegelungselemente 18 aktiv aus ihrer Klemmposition in eine Entriegelungsposition gemäß Fig. 7 zu überführen. Befinden sich die Verriegelungselemente 18 in der Entriegelungsposition, kann nach Öffnen der Lagermutter 20 der Plastifizierzylinder 14 aus dem Trägerblock 10 entnommen werden, so dass sich eine Darstellung gemäß Fig. 7 ergibt.

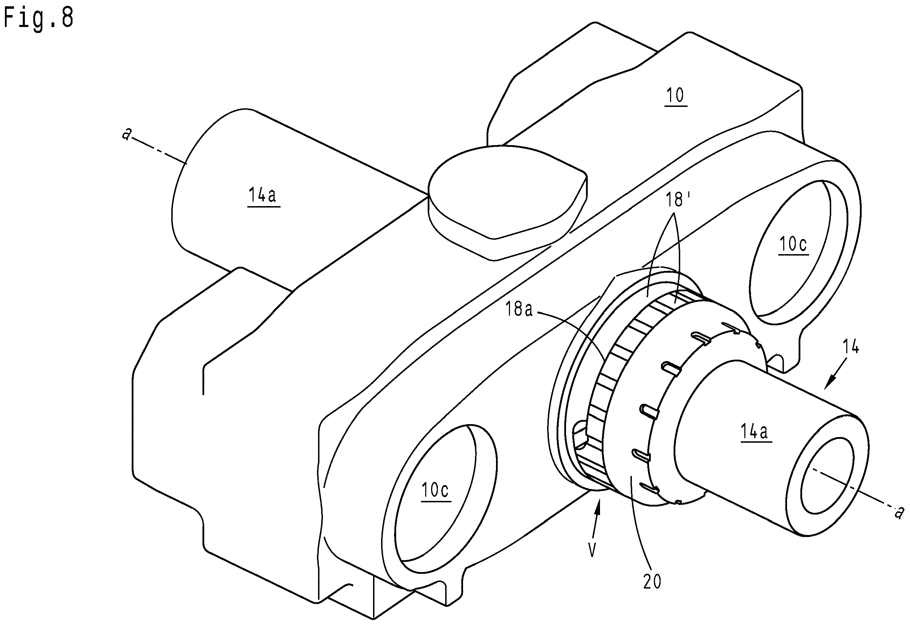

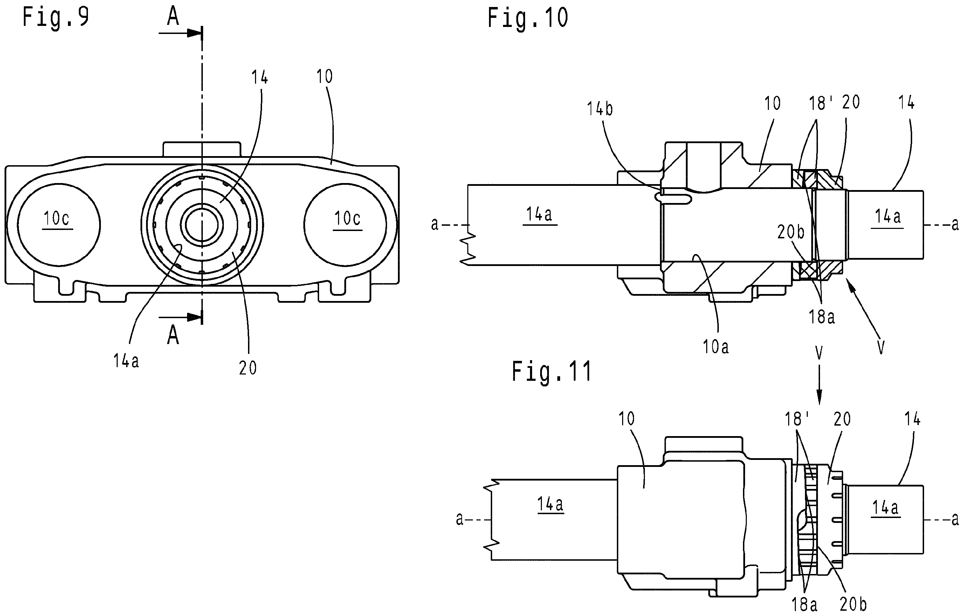

Die Fig. 8 bis 11 zeigen ein zweites Ausführungsbeispiel, in dem die Verriegelungselemente durch Drehkeile 18' gebildet sind. Diese Drehkeile 18' weisen auch hier unabhängig von Trägerblock 10 und Lagermutter 20 und damit auch unabhängig vom Plastifizierzylinder 14 gemäß Fig. 11 aufeinander zu zeigende Schrägflächen 18a auf, die allerdings als umlaufende Steigungsflächen gebildet sind.

Der weitere Aufbau ist grundsätzlich derselbe wie im ersten Ausführungsbeispiel, insbesondere was die Festlegung des Plastifizierzylinders 14 in der Aufnahmebohrung 10a des Trägerblocks 10 betrifft. Auch hier kommt die Schulter 14b gemäß Fig. 10 auf der linken Seite der Aufnahmebohrung 10a zur Anlage. Ist die Lagermutter 20 fixiert, bilden sich ebenfalls im rechten Winkel zur Spritzachse a-a liegende Lagerflächen 10b des Trägerblocks 10 sowie 20b der Lagermutter 20 aus. Zwischen diesen können die Drehkeile 18' relativ zueinander rotiert werden, wobei bei feststehender Lagermutter 20 sich eine entsprechende Verkeilung ergibt, wobei der Plastifizierzylinder 14 in Fig. 8 nach rechts gezogen wird. Die Lagermutter 20 dient als Gegenlager für die durch die Drehkeile 18' aufgebrachte Axialkraft. Ein Verstellen der Lagermutter 20 nach Aufbringen der Klemmkraft ist nicht möglich.

Die Steigungsflächen der Drehkeile 18' sind beabstandet vom Umfang des Plastifizierzylinders 14 und laufen um den Plastifizierzylinder herum. Damit ist auch hier eine symmetrische Krafteinleitung in den Plastifizierzylinder 14 über die an der Außenfläche 14a des Plastifizierzylinders 14 gelagerte Lagermutter 20 gewährleistet, die zudem über eine ausreichend große Fläche über den gesamten Umfang des Plastifizierzylinders kraftübertragend wirkt.

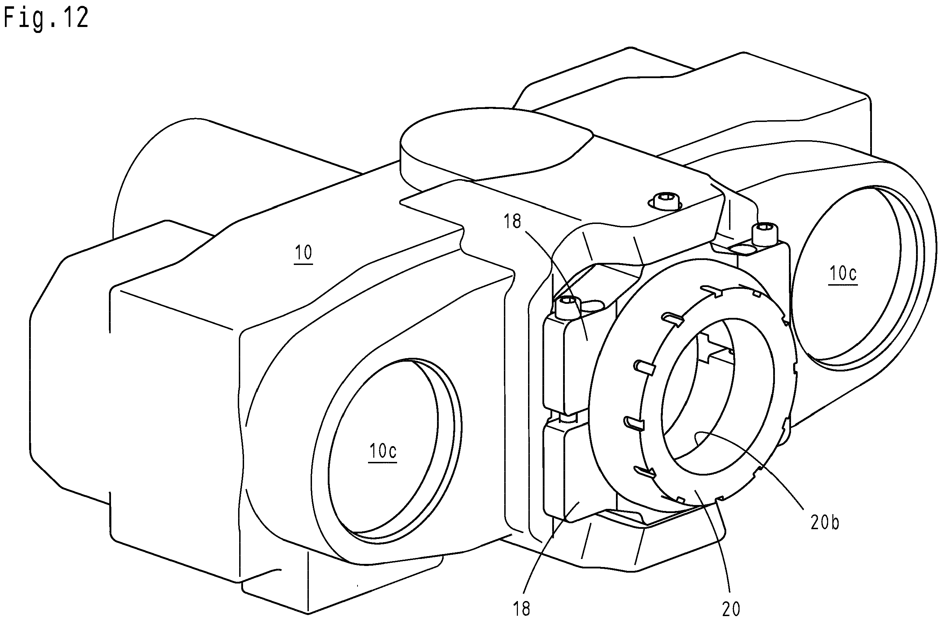

Die Figuren 12 bis 15 zeigen ein drittes Ausführungsbeispiel, bei dem die Verriegelungselemente 18 an der von der Lagerfläche 20b der Lagermutter 20 beabstandeten Seite gegenläufig geneigte Schrägflächen 18a aufweisen, die bei der Verriegelungs- bzw. Entriegelungsbewegung synchron an Schrägflächen 10d (Fig. 15) des Trägerblocks 10 gleiten.

Gemäß Fig. 13 sind auch hier Stellelemente 24 am Trägerblock 10 gelagert, um eine Fixierung der Verriegelungseinrichtung V mit ihren Verriegelungselementen 18 zu gewährleisten. Außermittig befindet sich ein weiteres Stellelement 34, das in der offenen Stellung der Verriegelungseinrichtung gemäß Fig. 13 gezeigt ist. Deutlich ist in der Mitte zwischen den Verriegelungselementen 18 ein Abstand zu erkennen. Die Verriegelungselemente 18 befinden sich dabei in einer symmetrisch zur Spritzachse a-a angeordneten Stellung. An einer Lagerfläche 20b (Fig. 15) der Lagermutter 20 sind die Verriegelungselemente 18 geführt. Auf der gegenüberliegenden Seite sind die Schrägflächen 18a vorgesehen, die gegenläufig angeordnet sind und zur Spritzachse a-a geneigt sind.

Gemäß Fig. 13 ist die Verriegelung noch offen, in der ein außermittig angeordnetes Stellelement 34 die Verriegelungselemente 18 noch auf Abstand hält. Um die Verriegelung zu bewirken, damit die Verriegelungseinrichtung V mit ihren Verriegelungselementen 18 tatsächlich den Plastifizierzylinder 14 mit dem Trägerblock 10 verriegelt, wird das Stellelement 34 so betätigt, dass die Verriegelungselemente 18 gemäß Fig. 14 sich annähern können. Dazu werden gemäß Fig. 14 weitere Stellelemente 36 betätigt, die näher an der mittig durch den Plastifizierzylinder gehenden Spritzachse a-a angeordnet sind und die Verriegelungselemente 18 miteinander verspannen. Um die Verriegelung zu lösen, ist der umgekehrte Ablauf auszuführen.

In Fig. 15 ist zu erkennen, dass die an den Schrägflächen 10d des Trägerblocks 10 anliegenden Schrägflächen 18a der Verriegelungselemente 18 oberhalb und unterhalb der Spritzachse a-a etwa gleich groß sind, d.h. sie sind flächengleich, so dass sich eine gleichmäßige Pressung ergibt, die zu einer axialen Klemmbewegung des Plastifizierzylinders 14 am Trägerblock 10 beiträgt. Durch die gegenläufigen Schrägflächen 18a der Verriegelungselemente 18 erzeugt jedes Verriegelungselement eine horizontale Klemmkraft in Richtung der Spritzachse a-a und eine Flächenkraft quer zur Spritzachse. Durch die unterschiedlichen Keilgeometrien sind die Flächenkräfte entgegengerichtet und heben sich somit auf, was verschleißminimierend wirkt.

Sowohl die Anordnung zur Spritzachse a-a als auch die Flächengleichheit tragen zu einer symmetrischen Krafteinleitung und dazu bei, dass sich kein negativer Einfluss insbesondere am Trägerblock 10 im Bereich der Zuführöffnung für das zu plastifizierende Material einstellt. Dies trägt zu einem schonenden Umgang sowohl mit dem Plastifizierzylinder 14 als auch zu einer gleichmäßigen Belastung der Verbindungsteile bei, was neben der Anordnung der Verriegelungselemente 18 weiter den Verschleiß der miteinander in Wirkverbindung stehenden Teile verringert.

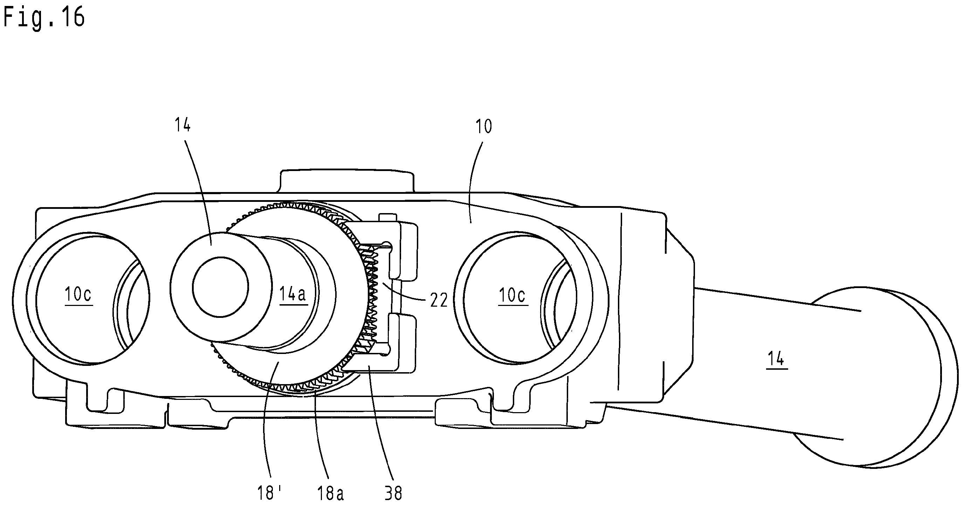

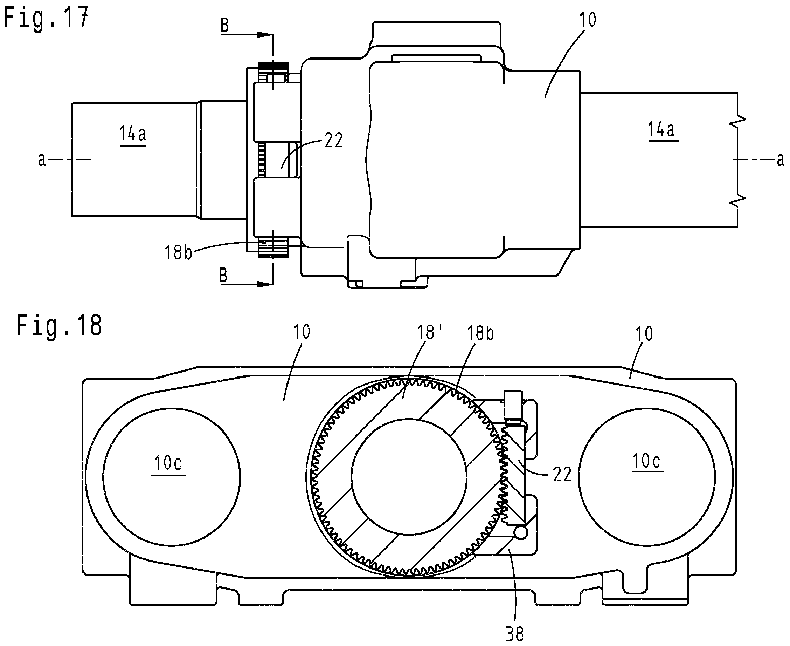

In Fig. 16 bis 18 ist in einem vierten Ausführungsbeispiel eine Möglichkeit dargestellt, wie insbesondere die rotierenden Muttern wie die Drehkeile 18' oder auch die Lagermutter 20 betätigt werden können. Im konkreten Ausführungsbeispiel ist ein Drehkeil 18' gezeigt, der außenseitig einen Zahnkranz 18b aufweist. Ein derartiger Zahnkranz kann an wenigstens einem der Drehkeile 18'oder an der Lagermutter 20 angeordnet werden. Mit dem Zahnkranz 18b des Drehkeils 18' kämmt eine Zahnstange 22, die in einer Lagerung 38 axial beweglich gelagert ist. Alternativ könnte sie auch wie ein Spindeltrieb um ihre vertikale Achse drehbar gelagert sein. Über ein Betätigungselement kann die Zahnstange axial verschoben werden. Durch ihren Eingriff in den Zahnkranz 18b kann eine rotierende Bewegung des Drehkeils 18' bewirkt werden, um die Verriegelung bzw. Entriegelung z.B. gemäß dem zweiten Ausführungsbeispiel zu bewirken.

Den Ausführungsbeispielen ist gemeinsam, dass eine symmetrische Krafteinleitung der beim Spritzgießprozess insbesondere beim Einspritzen entstehenden Kräfte in den Trägerblock 10 gewährleistet ist. Zudem kann durch die gewählte Anordnung der Verriegelungselemente 18, 18' eine verschleißarme Umsetzung und Gestaltung der miteinander zusammenwirkenden Teile erreicht werden.

Neben der manuellen Betätigung der Verriegelungselemente ist auch eine hydraulische, elektrische, pneumatische oder anders unterstützte Bewegung der Verriegelungselemente sowie der Verriegelungseinrichtung möglich.

### Bezugszeichenliste

- 10: Trägerblock
- 10a: Aufnahmebohrung
- 10b: Lagerfläche
- 10c: Aufnahmeöffnung für E
- 10d: Schrägfläche
- 12: Plastifiziereinheit
- 14: Plastifizierzylinder
- 14a: Außenfläche
- 14b: Schulter
- 16: Fördermittel
- 18: Verriegelungselement
- 18': Drehkeil
- 18a: Schrägfläche
- 18b: Zahnkranz
- 20: Lagermutter
- 20b: Lagerfläche
- 22: Zahnstange
- 24, 26: Stellelemente
- 30: Einspritzbrücke
- 32: Lagerelement
- 34, 36: Stellelement
- 38: Lagerung
- a-a: Spritzachse
- E: Einspritzeinheit
- V: Verriegelungseinrichtung

## Patentansprüche

1. Spritzgießeinheit für eine Spritzgießmaschine zur Verarbeitung von Kunststoffen und anderen plastifizierbaren Massen mit
- einem Trägerblock (10) mit einer Aufnahmebohrung (10a),
- einem auswechselbaren, in der Aufnahmebohrung (10a) lösbar aufnehmbaren Plastifizierzylinder (14) einer Plastifiziereinheit (12), in welchem Plastifizierzylinder (14) ein darin entlang einer Spritzachse (a-a) bewegbares Fördermittel (16) angeordnet ist,
- einer Verriegelungseinrichtung (V) zum wechselweisen Verriegeln der Plastifiziereinheit (12) am Trägerblock (10) und Entriegeln der Plastifiziereinheit (12) vom Trägerblock (10) durch Relativbewegung von quer zur Spritzachse (a-a) verlaufenden Schrägflächen (18a) an miteinander in Wirkverbindung stehenden Verriegelungselementen (18), die an Lagerflächen (10b, 20b) von Trägerblock (10) und/oder Plastifizierzylinder (14) geführt sind,
**dadurch gekennzeichnet, dass** eine Lagermutter (20) an der Außenfläche (14a) des Plastifizierzylinders (14) vorgesehen ist, deren in Richtung auf den Trägerblock (10) zeigende Fläche wenigstens eine der Lagerflächen bildet, und
dass mehrere Verriegelungselemente (18) vorgesehen sind, die *entweder* unabhängig von Trägerblock (10) und Plastifizierzylinder (14) aufeinander zu zeigende Schrägflächen (18a) aufweisen, die bei Verriegelungsbewegung und bei Entriegelungsbewegung aufeinander gleiten,
*oder* an der von der Lagerfläche (20b) der Lagermutter (20) beabstandeten Seite gegenläufig geneigte Schrägflächen (18a) aufweisen, die bei Verriegelungsbewegung und bei Entriegelungsbewegung synchron an Schrägflächen (10d) des Trägerblocks (10) gleiten.

2. Spritzgießeinheit nach Anspruch 1, **dadurch gekennzeichnet, dass** die Lagerflächen (10b, 20b) von Trägerblock (10) und/oder Lagermutter (20) im rechten Winkel zur Spritzachse (a-a) angeordnet sind.

3. Spritzgießeinheit nach Anspruch 1 oder 2, **dadurch gekennzeichnet, dass** die Verriegelungselemente (18) durch wenigstens zwei diametral zur Spritzachse (a-a) zwischen Trägerblock (10) und Lagermutter (20) geführte Keile gebildet sind.

4. Spritzgießeinheit nach Anspruch 1 oder 2, **dadurch gekennzeichnet, dass** die unabhängig von Trägerblock (10) und Lagermutter (20) aufeinander zu zeigenden Schrägflächen (18a) umlaufende Steigungsflächen von wenigstens zwei als Verriegelungselemente ausgebildeten Drehkeilen (18') sind.

5. Spritzgießeinheit nach Anspruch 4, **dadurch gekennzeichnet, dass** die Steigungsflächen beabstandet vom Umfang des Plastifizierzylinders (14) um den Plastifizierzylinder umlaufen.

6. Spritzgießeinheit nach Anspruch 4 oder 5, **dadurch gekennzeichnet, dass** wenigstens einer der Drehkeile (18') außenseitig einen Zahnkranz (18b) aufweist.

7. Spritzgießeinheit nach Anspruch 6, **dadurch gekennzeichnet, dass** eine Zahnstange (22) mit dem Zahnkranz (18b) des Drehkeils kämmt und bei axialer Bewegung der Zahnstange (22) relativ zum Trägerblock (10) ein Drehmoment am Drehkeil (18') bewirkbar ist.

8. Spritzgießeinheit nach einem der Ansprüche 1 bis 3, **dadurch gekennzeichnet, dass** bei an der von der Lagerfläche (20b) der Lagermutter (20) beabstandeten Seite gegenläufig geneigten Schrägflächen (18a) der Verriegelungselemente (18) die am Trägerblock anliegenden Schrägflächen (18a) der beiden Verriegelungselemente (18) flächengleich sind.

9. Spritzgießeinheit nach einem der vorhergehenden Ansprüche, **dadurch gekennzeichnet, dass** die Verriegelungselemente (18) mittels am Trägerblock (10) gelagerten und an den Verriegelungselementen (18) verstellbar gelagerten Stellelementen (24, 26) betätigbar sind.

## Claims

1. An injection moulding unit for an injection moulding machine for processing plastics and other plasticisable substances, comprising
- a carrier block (10) with a receiving bore (10a),
- a replaceable plasticiser cylinder (14)of a plasticiser unit (12), the plasticiser cylinder being removably receivable in the receiving bore (10a), in which plasticiser cylinder (14) there is arranged a feeding means (16) which is movable along an injection axis (a-a),
- a locking device (V) for alternately locking the plasticiser unit (12) on the carrier block (10) and unlocking the plasticiser unit (12) from the carrier block (10) by relative movement of bevel surfaces (18a) running transversely to the injection axis (a-a) on operatively connected locking elements (18) which are guided on bearing surfaces (10b, 20b) of the carrier block (10) and/or plasticiser cylinder (14),
**characterised in that** a bearing nut (20) is provided on the outer surface (14a) of the plasticiser cylinder (14), the surface of said bearing nut oriented in the direction of the carrier block (10) forms at least one of the bearing surfaces, and **in that** a plurality of locking elements (18) are provided which
*either* have bevel surfaces (18a) which are oriented toward each other, independently of the carrier block (10) and plasticiser cylinder (14), and which slide on each other during a locking movement and during an unlocking movement,
or have, on the side spaced from the bearing surface (20b) of the bearing nut (20), oppositely inclined bevel surfaces (18a) which slide synchronously on bevel surfaces (10d) of the carrier block (10) during a locking movement and during an unlocking movement.

2. An injection moulding unit in accordance with claim 1, **characterised in that** the bearing surfaces (10b, 20b) of the carrier block (10) and/or bearing nut (20) are arranged at a right angle to the injection axis (a-a).

3. An injection moulding unit in accordance with claim 1 or 2, **characterised in that** the locking elements (18) are formed by at least two wedges guided diametrically to the injection axis (a-a) between the carrier block (10) and bearing nut (20).

4. An injection moulding unit in accordance with claim 1 or 2, **characterised in that** the bevel surfaces (18a) which are oriented toward each other, independently of the carrier block (10) and bearing nut (20), are circumferential inclined surfaces of at least two rotary wedges (18') formed as locking elements.

5. An injection moulding unit in accordance with claim 4, **characterised in that** the inclined surfaces run around the plasticiser cylinder in a manner spaced from the circumference of the plasticiser cylinder (14).

6. An injection moulding unit in accordance with claim 4 or 5, **characterised in that** at least one of the rotary wedges (18') has a toothed ring (18b) externally.

7. An injection moulding unit in accordance with claim 6, **characterised in that** a toothed rack (22) meshes with the toothed ring (18b) of the rotary wedge and, when the toothed rack (22) moves axially relative to the carrier block (10), a torque can be effected on the rotary wedge (18').

8. An injection moulding unit in accordance with claims 1 to 3, **characterised in that**, in the case of oppositely inclined bevel surfaces (18a) of the locking elements (18) on the side spaced from the bearing surface (20b) of the bearing nut (20), the bevel surfaces (18a) of the two locking elements (18) bearing against the carrier block are of equal area.

9. An injection moulding unit in accordance with the preceding claims, **characterised in that** the locking elements (18) are actuatable by means of adjustment elements (24, 26) mounted on the carrier block (10) and mounted adjustably on the locking elements (18).

## Revendications

1. Unité de moulage par injection pour une machine de moulage par injection pour la transformation de matières plastiques et d'autres masses plastifiables, comportant
- un bloc de support (10) avec un orifice de réception (10a),
- un cylindre de plastification échangeable (14) d'unité de plastification (12) pouvant être reçu dans l'orifice de réception (10a) de manière amovible, un moyen d'alimentation (16) mobile étant disposé dans le cylindre de plastification (14) le long d'un axe d'injection (a-a),
- un système de verrouillage (V) pour un verrouillage réversible de l'unité de plastification (12) au niveau du bloc de support (10) et un déverrouillage de l'unité de plastification (12) du bloc de support (10) par un mouvement relatif de surfaces de travers (18a) s'étendant perpendiculairement à l'axe d'injection (a-a) sur des éléments de verrouillage (18) coopérant les uns avec les autres et qui sont guidés sur des surfaces de réception (10b, 20b) du bloc de support (10) et ou du cylindre de plastification (14),
**caractérisée en ce qu'**une rainure de réception (20) est prévue sur la surface extérieure (14a) du cylindre de plastification (14) et forme en direction de la face tournée vers le bloc de support (10) au moins l'une des surfaces de réception et **en ce que** plusieurs éléments de verrouillage (18) sont prévus, qui
*soit* présentent, indépendamment du bloc support (10) et du cylindre de plastification (14), les surfaces de travers (18a) tournées les unes vers autres, qui glissent les unes sur les autres lors du mouvement de verrouillage et du moment de déverrouillage,
soit présentent, du côté espacé de la surface de réception (20b) de la rainure de réception (20), les surfaces de travers (18a) inclinées de manière opposée, qui glissent lors du mouvement de verrouillage et du mouvement de déverrouillage de manière synchronisée sur des surfaces de travers (10d) du bloc de support (10).

2. Unité de moulage par injection selon la revendication 1, **caractérisée en ce que** les surfaces de réception (10b, 20b) du bloc de support (10) et/ou la rainure (20) sont disposées à angle droit par rapport à l'axe d'injection (a-a).

3. Unité de moulage par injection selon la revendication 1 ou 2, **caractérisée en ce que** les éléments de verrouillage (18) sont formés par au moins deux cales guidées diamétralement par rapport à l'axe d'injection (a-a) entre le bloc de support (10) et la rainure de réception (20).

4. Unité de moulage par injection selon la revendication 1 ou 2, **caractérisée en ce que** le surfaces de travers (18a) tournées l'une vers l'autre indépendamment du bloc de support (10) et de la rainure de réception (20) sont des surfaces en pente périphériques d'au moins deux cales tournantes (18') réalisées sous la forme d'éléments de verrouillage.

5. Unité de moulage par injection selon la revendication 4, **caractérisée en ce que** les surfaces en pente s'étendent à distance du périmètre du cylindre de plastification (14) autour de ce dernier.

6. Unité de moulage par injection selon la revendication 4 ou 5, **caractérisée en ce qu'**au moins l'une des cales tournantes (18') présente sur le côté extérieur une couronne dentée (18b).

7. Unité de moulage par injection selon la revendication 6, **caractérisée en ce qu'**une crémaillère (22) engrène avec la couronne dentée (18b) de la cale tournante et lors du déplacement axial de la crémaillère (22) par rapport au bloc de support (10) un moment de rotation peut être exercé au niveau de la cale tournante (18').

8. Unité de moulage par injection selon l'une des revendications 1 à 3, **caractérisée en ce que** dans le cas de surfaces de travers (18) des éléments de verrouillage (18) qui sont inclinées de manière opposée du côté espacé de la surface de réception (20b) de la rainure de réception (20), les surfaces de travers (18a) des deux éléments de verrouillage (18) situées sur le bloc de support sont de surface égale.

9. Unité de moulage par injection selon l'une des revendications précédentes, **caractérisée en ce que** les éléments de verrouillage (18) sont actionnables au moyen d'éléments de réglage (24, 26) reçus sur le bloc de support (10) et reçus de manière réglable sur les éléments de verrouillage (18).
